# EUROPEAN PATENT SPECIFICATION

(11) **EP 3 466 507 B1**
(45) Date of publication and mention of the grant of the patent: **19.10.2022**
(21) Application number: 17802255.4
(22) Date of filing: 24.05.2017
(51) Int. Cl.: B01D 1/00, B01D 1/18, F02B 1/04, B01D 3/06, B01D 3/00

(54) **SYSTEM FOR DRYING LIQUID BLOOD**
SYSTEM ZUM TROCKNEN VON FLÜSSIGEM BLUT
SYSTÈME DE DÉSHYDRATATION DE SANG LIQUIDE

(30) Priority: 25.05.2016 ES 201630675
(43) Date of publication of application: 10.04.2019
(73) Proprietor: Universidade de Santiago de Compostela, 15782 Santiago de Compostela, La Coruña (ES)
(72) Inventor: MAGIDE AMEIJIDE, José Manuel, 15782 Santiago de Compostela (La Coruña) (ES); VARELA RODRÍGUEZ, Hiram, 15782 Santiago de Compostela (La Coruña) (ES)
(74) Representative: Balder IP Law, S.L.
(86) International application number: PCT/ES2017/070349
(87) International publication number: WO 2017/203085

(56) References cited:
- EP-A1- 2 716 341
- CA-A1- 2 065 582
- CN-A- 105 000 782
- GB-A- 203 109
- GB-A- 796 331
- US-A- 4 067 119
- US-A- 5 645 693
- US-A1- 2013 092 523
- US-B1- 6 261 419

## Description

### TECHNICAL FIELD OF THE INVENTION

The present invention relates to a system of processing food industry byproducts and/or waste, more specifically it relates to a system for the production of a dried product from liquid blood or derivatives.

### STATE OF THE ART

A person skilled in the art of processing liquid blood knows that the blood produced in the meat sector is usually subjected to treatments transforming it into a derivative product of the blood, such as red blood cells, blood plasma, blood serum, blood meal, etc. These transformations occasionally generate a product that looks like blood but technically cannot be called blood.

It should be pointed out that in order to obtain a derivative of the blood, both techniques which extract components from the original blood and techniques which add a component to obtain the derivative are contemplated. An example of the first case consists of treatments with centrifuges, which are frequently used to separate red blood cells. Examples of the type of centrifuges which can be applied for this purpose are disclosed in patent documents US2011124481 and US4077564. The second case consists of preserving blood by means of adding anticoagulant salts, such as sodium citrate. There are many techniques that use it, for example vacuum evaporation processes in general (among which the present invention is comprised) add sodium citrate in a step prior to introducing the blood in the evaporator.

Drying blood or derivatives generates a product that has a high economic value on the market. Its content of lysine, an essential amino acid in the diet of many animals, stands out. Nevertheless, turning it from waste to value has conventionally been very complicated. The reason is that two problems arise: the high energy cost of removing the water from the blood or derivative, and the need to not raise the temperature of the process for obtaining the product too much. The first problem is based on the fact that the evaporation of the water has a very high energy cost, around 550 Kcal/Kg. Furthermore, subjecting the blood to high temperatures causes its proteins to become denatured and lose part of their economic value. Thus, the lower the temperature of the treatment, and the shorter said treatment is, the higher the protein quality of the dried product, and therefore the higher the economic value.

Among the techniques for drying a product such as blood, one of the most energy efficient techniques are multi-effect evaporators, which consist of a series connection of a set of individual evaporators. These systems have the technical advantage that they recover the condensation heat of the vapor generated in each individual evaporator, such that an energy saving proportional to the number of evaporators is produced. By way of example, in a system of three evaporators, the energy expenditure can be reduced to less than 40%, which would correspond to a single evaporator. This equipment is widely used in the prior state of the art, so no in-depth explanations will be provided, and those particular features thereof which are not common will be highlighted. However, the multi-effect evaporators described in the current state of the art are not suitable for drying blood, or at the very least, they are used for concentrating blood to a certain level, for example, to 25% of solids on a wet basis, to then send the blood to a finaliser device.

The finaliser devices are in charge of withdrawing the moisture that could not be removed in the preceding equipment, to the desired degree of moisture, allowing its marketing and preservation. This degree of moisture is typically 8-10%. A typical example of a finaliser device is atomisation or spray dryers. In these dryers, the blood, which is pre-concentrated beforehand, is sprayed by means of an atomisation mechanism and is permeated by a hot air stream at 170°C. This equipment has serious drawbacks. On the one hand, since the removed water vapor is not reused by the dry product, it is more expensive than the multi-effect evaporators mentioned in the preceding paragraph. On the other hand, the considerable increase in temperature, even though the contact time between the blood and air is very brief, contributes to increasing protein denaturation.

The main reason conventional multi-effect evaporators are not suitable for performing the entire process of drying blood is that they work poorly with moderately viscous or very viscous fluids. If the evaporators are natural circulation evaporators, they may have operating problems, even at low viscosities. The inclusion of forced circulation pumps allows working with higher viscosities, but they are still lower than those viscosities the blood reaches during the process of drying it. Furthermore, blood is susceptible to forming scaling on the exchange surfaces, which considerably reduces the heat transfer coefficient.

Another relevant phenomenon is that the blood is a biologically active fluid with the presence of animal cells and important biochemical activity. This characteristic establishes a crucial difference between blood and commonly used industrial fluids. Part of said activity consists of the formation of blood component coagulates, largely due to the action of fibrin. These properties must be taken into account in the system of evaporators.

Document US2013092523 A1 discloses an evaporator comprising a plurality of tubes arranged to support a vertical film of saline water and to evaporate water from the film by heat transfer from a condensate film of condensing vapor within the tubes. Document US6261419 B1 describes a distillation system evaporator and condenser unit for use in distilling a liquid such as water.

### DESCRIPTION OF THE INVENTION

Therefore, there is a need for new systems for processing blood and/or derivatives which solve at least one of the mentioned problems. An objective of the present invention is to meet said need.

The invention provides a solution for the above-mentioned problems by means of a system for the production of a dried product from liquid blood or derivatives according to claim 1. Preferred embodiments of the invention are defined in dependent claims.

The invention relates to a system for drying liquid blood, which can be used to obtain a dried product from liquid blood and/or derivatives at a low temperature and at a moderate energy cost. The liquid blood to be treated is obtained preferably from the meat industry, such as, for example, a slaughterhouse.

For the present invention, the term "blood" also includes the derivative products thereof that may be of application.

As has already been explained, since blood is a biological fluid, it has a biochemical activity which gives it fundamental differences with respect to most fluids which are treated with heat exchangers in the state of the art. This invention was conceived, taking into account all these differences, to provide an effective solution to the process of drying blood.

The main particular feature of the blood is the coagulation phenomenon. While blood circulates in living beings, this phenomenon is usually inhibited, but should it flow out of the body, coagulation occurs in a time usually to the order of several minutes. Coagulated blood is hard to pump, flows with difficulty and fouls the heat exchange surfaces, such that it greatly hinders drying treatments.

The biochemical mechanism which causes coagulation is as follows. Blood contains a protein, fibrinogen, which by means of the enzyme thrombin, is converted into fibrin, another fibrous and not globular protein, with the capacity to polymerize and thus form large three-dimensional networks. These networks act like a glue, and readily trap large amounts of blood cells, thus forming a coagulum.

There are different possibilities for preventing or limiting coagulation. The addition of anticoagulant salts is a very wide-spread possibility, but it has the drawback of increasing the boiling temperature, which is detrimental to evaporators and is therefore ruled out in this invention. An alternative is to impart movement to the blood, because coagulation is thus delayed. Another possibility is to permeate the blood by means of certain agitator elements on which the fibrin networks are adhered. By doing so, they are separated from the rest of the fluid and no longer act on its cells and other components in suspension.

In the present invention, the adverse effects of fibrin are counteracted by means of the following four actions:
1) Imparting movement to the blood.
2) Applying tangential stresses.
3) Facilitating the fibrin accumulation on a movable surface.
4) Scraping heat exchange surfaces to remove possible fibrin scaling or coagula.

The concept "tangential stresses" is interpreted herein from the viewpoint of the mechanics of continuous media, such as the situation in which the Cauchy stress tensor has important components other than the diagonal.

As regards point three, said movable surface does not perform any heat exchange, so there is no problem with the fibrin accumulation thereon.

To provide an effective solution to the situations expressed up until now, heat exchange plates are arranged in the vertical position each one being separated from the contiguous one by a distance to the order of several centimetres. The vertical orientation prevents the decantation of particles or coagula on the exchange surfaces, and the scarce separation distance increases the exchange surface/exchanger volume ratio.

An additional measure comprises the inclusion of agitators in the chambers the blood passes through. In that manner, at least one agitator is boxed in between two contiguous vertical plates. This type of configuration and geometry is of particular interest in the treatment of blood, since it produces a turbulent flow of a large magnitude, even with agitators moving at low revolutions per minute, for example to the order of 20 r.p.m. That is, the energy expenditure is minimised while at the same time movement is imparted to the blood through the turbulence running through it, which limits coagulation.

Another optional measure which this invention uses is the use of agitators with an angle of incidence of 90° (described later, also called second plurality) and which pass by the heat exchange surfaces at a very small distance, to the order of several millimetres. As they start to move, they move the blood and force a part of it to go through this scarce separation between the agitator and heat plate. During that transit, the constant stresses largely increase due to the fact that at that spatial scale, viscous forces are very relevant. The shear stresses generated are an additional measure that the present invention introduces to limit the formation of newly formed fibrin and to destabilise those that are already formed. Finally, agitators of this type trap on their surface those polymerized fibrin networks, the formation of which could not be prevented by turbulence or by shear stress.

The system for the production of a dried product from liquid blood or derivatives object of the present invention comprises the components as in claim 1.

The system object of the present invention is wherein the heat pump absorbs heat of an industrial effluent which is at a temperature comprised in the range of 30-80 °C.

In a preferred embodiment the heat pump comprises a first heat exchanger connected in series to a second heat exchanger. In the heat pump, a fluid subjected to various pressure changes by the action of a compressor circulates in a closed loop; by way of non-limiting example, this fluid can be refrigerant R-134a, which in the first heat exchanger operates at a pressure comprised in the range of 1-5 bar, whereas in the second heat exchanger it operates at a pressure comprised in the range of 15-30 bar.

The system of multi-effect evaporators comprises
a. two or more multi-effect evaporators wherein they reduce the moisture content of the blood to a value less than 25% on a dry basis;
b. plate heat exchangers and optionally;
c. a first plurality of agitator mechanisms wherein they apply scraping on the heat exchange surface, removing scaling; and
d. a second plurality of agitator mechanisms wherein they apply stirring, which limits the negative effects of fibrin.

In the present invention, the term vapor refers to water vapor with the possibility of having other volatile substances or non-condensable gases incorporated therein, such as CO₂, atmospheric air, etc., which are released by the blood itself, or accidentally introduced by leaking in from the outside.

In a preferred embodiment, the system of multi-effect evaporators is located on one and the same vertical.

In a preferred embodiment, the system of multi-effect evaporators is comprised of two evaporators; in an even more preferred embodiment, the system of multi-effect evaporators is comprised of three evaporators.

In a particular embodiment of the invention, the first plurality of agitator mechanisms sweeps the surfaces of the plate heat exchangers and comprises rotating blades which apply pressure thereon by the action of a spring or equivalent mechanism. In an alternative embodiment, the first plurality of agitator mechanisms comprises brushes. The action of this first plurality of agitator mechanisms guarantees the removal of those particles which may adhere to the exchange surface, such as red blood cells, fibrin, albumin, or any type of coagulum. The blades furthermore mechanically break the boundary layer of fluid in contact with the surface, so they considerably increase the heat transfer coefficient.

In the embodiment of the invention, the heat exchange surface of the heat exchangers comprises plates located vertically. In such a configuration, the exchangers have two chambers: a first chamber of the heating fluid and a second chamber of the product to be dried. The fluid providing heat for the drying circulates in the first chamber. A sub-chamber belonging to one of the two mentioned chambers is located between every two contiguous plates. By way of example, when considering an exchanger with 10 plates, numbered correlatively 1, 2, 3,..., 10, the blood to be dried circulates between pairs 1-2, 3-4, 5-6, 7-8 and 9-10, and the heating fluid circulates between complementary pairs 2-3, 4-5, 6-7 and 8-9. Configurations of this type and their operation are known in the state of the art, and further clarifications are not required. The separation contemplated between each pair of contiguous plates is to the order of several centimetres.

In the present invention, the term slender refers to a rectangular geometric configuration in which two sides are several orders of magnitude larger than the other two.

The second plurality of agitator mechanisms has a slender rectangular cross section which maximises the fibrin accumulation on its surface, separating it from the rest of the fluid. The last evaporator of the system of evaporators is characterised in that it comprises a third plurality of agitator mechanisms comprising one or more paddles which move the blood or derivatives in the heat exchanger. In a preferred configuration, the paddles of this third plurality of agitator mechanisms have a cross section that is thicker than the cross section of the first and second plurality of agitators, for the purpose of withstanding the mechanical forces, which are expected to be greater. Furthermore, a concave cross section is particularly advantageous since it facilitates a greater accumulation of product on its surface, and therefore a more effective stirring thereof. A concave profile, by retaining a larger amount of product, causes each revolution of the shaft to move a larger amount thereof and therefore reduces homogenisation time.

In the present invention, the term homogenisation time refers to the time it takes an agitator mechanism to stir the product until the particles with a higher degree of moisture have been homogeneously dispersed among the particles with a lower degree of moisture, or vice versa.

In summary, three types of agitators have been contemplated up to this point. A first plurality applies a scraping effect on the exchange surfaces, a second plurality generates stirring which limits the adverse effects of fibrin, and a third plurality is in the last evaporator and homogenises the product.

The outlet vapor generated by the system of evaporators is collected by a condenser which is powered with water, which water comes from the network for supplying water to an industry and is at the usual network temperature, in the range of 7-20 °C.

In one aspect of the present invention, the second plurality of agitator mechanisms generates a movement in the fluid and furthermore promotes adherence on its surface of the fibrin networks which cannot be destabilised with said movement. When the process ends, for example at the end of each work day, the evaporator is opened and the fibrin is manually removed. The three pluralities of agitators are located in the space confined between two consecutive exchange plates.

The scrapers of the first plurality of agitator mechanisms, in their configuration in the form of blades, have an edge with a very acute angle conceived to offer a great cutting capacity, and it applies the scraping effect. The angle of incidence of the scrapers in motion with respect to the blood, thus defined by analogy with the angle of incidence of the wing of an aircraft, is also acute. To clarify, an angle of incidence of 0° would mean that the agitator is located parallel to the plate on which it acts, and an angle of 90° would mean that it is located perpendicular to the plate. It is contemplated that this angle is less than 30°. On the other hand, the scrapers are subjected to the action of a spring or similar mechanism which presses them against the plates. This implies that they will have a thickness greater than that corresponding to the second plurality of agitators, as they have to withstand greater mechanical forces.

The movable elements of the second plurality of agitator mechanisms, conceived for retaining fibrin and limiting coagulation, move with an angle of incidence of 90° or close to said value. This angle facilitates the formation and maintenance on the agitator of fibrin accumulations which do not become destabilised with the turbulence or tangential stress of the fluid. If the angle was smaller, the agitator would more readily shear through the fluid and the accumulations would take a longer time to form on its surface, and once they are formed, they would be susceptible to more readily and more quickly detach, which could lead them to adhere to more stable surfaces, such as the heat exchange plates, which would be very negative. Furthermore, if fibrin accumulations detach from the agitator and are left in suspension, which would be more likely with an acute angle of incidence, they could likewise endanger the system, as fibrin accumulations impair the rheological properties of the fluid and complicate the driving of such fluid by means of possible pumps.

Unlike the scrapers, the agitators of the second plurality do not apply contact on the exchange plates, but they preferably extend to within a short in distance from same. A short distance can be interpreted to the order of several millimetres. The cross section of the agitators, obtained through a transverse plane of section, is preferably rectangular.

The third plurality of agitator mechanisms has the function of moving the treated product when it does not have a liquid consistency, in a manner similar to that of a paddle moving a granular product. To facilitate this task, the agitators are situated with an angle of incidence of or close to 90°, and it is contemplated that it is concave in shape so as to potentiate the capacity to accumulate product and raise it up in the upward paths of the agitator. The thickness of this third plurality is envisaged to be greater than that of the other two pluralities so as to withstand the mechanical forces involved.

In a preferred embodiment, the first and second plurality of agitators, formed by scraper elements and elements for limiting the negative effects of fibrin, respectively, describe a circular movement, as they are fixed to a rotating shaft that spans the length of the heat exchanger, actuated by a motor located outside the exchanger.

The particular advantage of arranging vertical plate heat exchangers should be pointed out. They establish an enormous improvement with respect to traditional equipment for drying blood, such as digester-type equipment, conventional forced circulation evaporators, etc. In the digesters, the exchange surface is only a cylindrical-shaped outer sleeve. By dividing and compartmentalising the volume of the exchanger by means of a series of exchange plates, for one and the same exchanger volume, a much larger exchange surface is obtained. Furthermore, since the agitators are boxed in between two contiguous plates, their movement generates much greater turbulence than that obtained in forced circulation evaporators or digesters. By way of example, if the separation between contiguous plates is 100 mm, the width of the agitators can be 95 mm. It is observed that they move very close to the edges of both plates. In a manner that is equivalent to the effect of baffle plates in agitation tanks, this boxing in of the agitators largely increases turbulence, which is turn improves the heat exchange, limits the formation of coagula and reduces the formation of scaling.

An unwanted phenomenon present in devices of the state of the art, and which the present invention counteracts, is the increase in the rate of coagulation with temperature. Although the working temperatures of the multi-effect evaporators can be very low (temperatures less than 55°C are contemplated in this invention), they always lead to greater coagulation than at room temperature or refrigerated. This reason has meant that treatments in the state of the art aimed at removing fibrin from blood are performed in a phase prior to the process of removing water, usually at low temperatures (for example with cooling at less than 8°C). However, the arrangement of agitators boxed in between vertical plates generates greater turbulence than what is usual in devices of the state of the art, counteracting the increase in coagulation and allowing the work with whole blood that has not previously been defibrinated. This advantage saves time and the need for an agitated tank with cooling equipment in many cases.

Furthermore, the techniques for defibrination before the process of drying do not prevent subsequent coagulation from occurring. Although this process removes most of the fibrin and the susceptibility to coagulate is largely reduced, it is never removed in its entirety and coagula will be produced in the process of drying. The present invention envisages for the blood to be under the action of scrapers and stirrers in all the evaporators in which it is in liquid form, whereby the removal of fibrin (and blocking of coagulation) is continuous throughout the entire process of drying.

The last evaporator, the one in which the blood leaves the system with the desired degree of moisture, in a preferred but non-limiting manner has paddles for moving, and not agitators for retaining fibrin. This is because in the last evaporator, the blood has lost its liquid consistency and cannot be moved like a fluid. The paddles have surfaces of a shape and dimensions similar to those of the agitators, but with a higher mechanical strength, such that they are capable of withstanding and moving the weight of the blood accumulated between every two contiguous plates.

### BRIEF DESCRIPTION OF THE FIGURES

The modalities described in detail in the figures are illustrated by way of non-limiting example:
**Figure 1** shows a flow diagram of the system object of the present invention.
**Figure 2** shows an enlarged detail of an evaporator.
**Figure 3** shows a particular embodiment of an evaporator.
**Figure 4** shows an enlarged detail of the evaporator according to Figure 2.
**Figure 5** shows a perspective view of an evaporator according to Figures 2 and 3.
**Figure 6** shows a cross-sectional perspective view of two exchange plates
**Figure 7** shows a depiction of the first plurality of agitators present in the first evaporator and second evaporator.
**Figure 8** shows a depiction of the second plurality of agitators present in the first evaporator and second evaporator.
**Figure 9** shows third plurality of agitators.

### DETAILED DESCRIPTION OF THE INVENTION

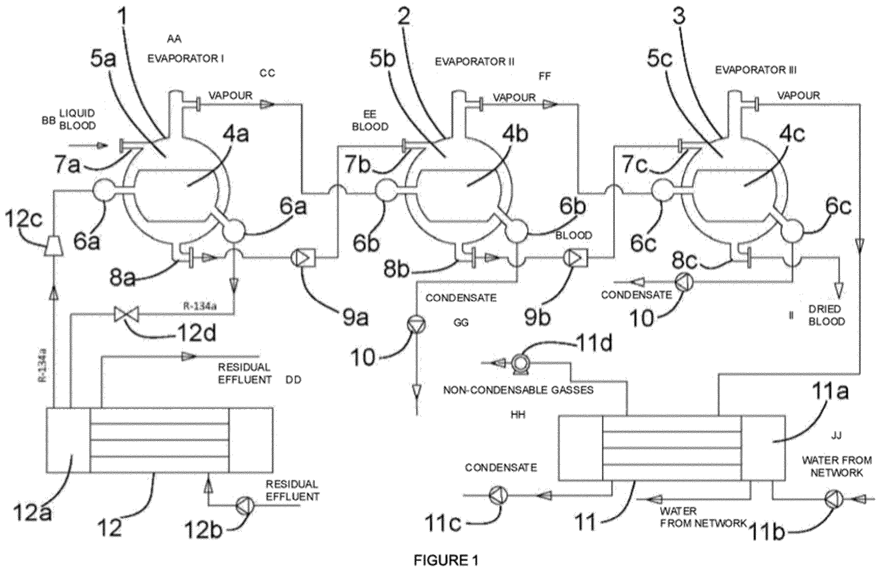

**Figure 1** depicts a flow diagram of a particular embodiment of the system object of the present invention- As can be seen in Figure 1, in this particular embodiment three evaporators (1, 2 and 3), are arranged in series, together forming a system of multi-effect evaporators operating under vacuum. Each individual evaporator has two chambers: an evaporation chamber (5a, 5b and 5c) and a condensation chamber (4a, 4b and 4c). When reference is made herein to an evaporation chamber, without specifying to which evaporator (1, 2 and 3) it belongs, it will be indicated by means of (5), and the same will occur with evaporation chambers (4). The product to be dried is always located in the evaporation chamber of the first evaporator (5a). In the first evaporator (1), the refrigerant fluid R-134a, which has qualities making it suitable for use in the food industry, circulates through the condensation chamber (4a). The vapor generated in the evaporation chamber (5a) of the first evaporator (1) circulates in the condensation chamber (4b) of the second evaporator (2). And the vapor generated in the evaporation chamber (5b) of the second evaporator (2) circulates in the condensation chamber (4c) of the third evaporator (3). The entry and exit of fluid into/from the condensation chambers (4a, 4b and 4c) of each evaporator (1, 2 and 3) is carried out through collectors (6a, 6b and 6c).

The vapor which circulates through the condensation chamber (4b) of the second evaporator (2) transfers its latent heat of condensation to the blood of the evaporation chamber (5b) of that same evaporator (2), which is possible due to the fact that both chambers (4b and 5b) are at different pressures. Accordingly, the condensation temperature of the vapor is greater than the boiling temperature of the blood, which allows heat transfer. The liquid obtained through condensation of the vapor in the second evaporator (2) is purged out of the system by means of a centrifugal pump (10). All that has been described in this paragraph also applies for the third evaporator (3).

The vapor exiting the third evaporator (3) is taken to a condenser (11), comprising a shell and tube-type heat exchanger (11a). The vapor to be condensed circulates on the shell side, and water from the network to be supplied to the meat industry circulates through the inside of the tubes at a temperature less than the temperature of the vapor. This water arrives at a normal temperature of between 7 and 20° C, depending on the location and the time of year, and is used in large amounts by slaughterhouses for tasks such as cleaning, sterilisation, powering boilers, etc. At the outlet of the exchanger (11a), the water from the network is at a temperature greater than the temperature at the inlet. Taking into account that meat industries or slaughterhouses need to heat a large part of the water from the network that they consume, this exchanger (11a) involves an energy saving. By way of example, a slaughterhouse typically needs to heat 60% of the water from the network that it consumes at temperatures greater than 62°C, in order to use it as cleaning water. The water from the network is driven through the exchanger (11a) by means of a centrifugal pump (11b).

Inside the shell of the heat exchanger (11a) of the condenser (11), and outside the tubes, the vapor coming from the third evaporator (3) condenses, transferring its heat of condensation to the water from the network. The formed liquid is expelled out of the exchanger (11a) by means of a centrifugal pump (11c), conveniently located in the lower area of the exchanger (11a) to facilitate the drainage and priming of the suction conduit of the pump (11c). That part of the vapor that could not be condensed is expelled out of the condenser (11) by means of a vacuum pump (11d), conveniently located in the upper area of the exchanger (11a), to prevent the entry of liquids. The working vacuum in the evaporation chamber (5c) of the third evaporator (3) is maintained both by the condensation of the vapor in the condenser (11) and by the action of the vacuum pump (11d).

The crude blood is drawn from recently slaughtered animals by a hygienic mechanism consisting of a hollow blade knife connected to a suction tube. The blood is then introduced directly into the first evaporator (1) through an inlet conduit (7a). In this evaporator (1), the blood loses moisture to then leave the evaporator through an outlet conduit (8a).

The inlet conduits (7a, 7b and 7c) are located in a higher position than the outlet conduits (8a, 8b and 8c), and the latter are located at the bottom of the evaporator (1, 2 and 3) to facilitate drainage of the blood.

The blood leaving the first evaporator (1) is driven to the inlet conduit (7b) of the second evaporator (2) with the help of a peristaltic pump (9a). Once the blood has lost a certain degree of moisture in the second evaporator (2), it leaves there through its outlet conduit (8b) and is then moved, with the help of a peristaltic pump (9b), to the inlet conduit (7c) of the third and last evaporator (3), where it will reach the desired degree of moisture to be sold as blood meal. The dry product is expelled from the system of the evaporator through the outlet conduit (8c) of said third evaporator (3).

In an alternative embodiment, the three evaporators (1,2 and 3) are located on one and the same vertical, such that the blood moves from one evaporator to the next by the effect of gravity.

The energy required for the evaporation of the blood is provided by means of a heat pump (12), comprising a shell and tube heat exchanger (12a). A residual effluent of the meat industry circulates inside the shell and outside the tubes, driven by means of a centrifugal pump (12b). This effluent comprises industry cleaning water, pig scalding water, animal urine, etc. The cleaning water is commonly used with an ambient temperature at 65°C, whereby they are usually drained once used, and assuming that there is no heat pump, with a temperature slightly less than, for example, 55°C. Furthermore, slaughterhouses using the pig scalding technique use for such purpose water at a temperature between 60 and 85°C which, once used, is slightly cooled and converted into a contaminating waste which must be treated in a wastewater treatment station. Regardless of their origin, residual effluents have a temperature that is low enough to make harnessing energy from them through common technical means difficult or not cost-effective. However, the heat pump (12) efficiently absorbs the heat energy of the residual effluents and transfers it to the refrigerant fluid R-134a, which circulates inside the tubes of the exchanger (12a). Since it is absorbing energy from a residual effluent, which inevitably occurs and the destination of which is the drain or a wastewater treatment system, there is a significant lowering of the energy cost in the process of drying the blood. The heat pump can absorb energy from the residual effluent provided that the latter is at a temperature greater than 30°C.

In this particular embodiment, the residual effluent enters the exchanger (12a) at a preferred temperature of 40°C and leaves it at a preferred temperature of 25°C. This heat it has given off is absorbed by the R-134a fluid, which evaporates inside the tubes of the exchanger (12a) at a temperature of 10°C and at preferred pressure of 4.25 bar. This fluid is taken to the compressor (12c), which raises its preferred pressure from 19.5 bar, corresponding with a condensation temperature around a preferred temperature of 65°C. Once it enters the condensation chamber (4a) of the first evaporator (1), it condenses and transfers the heat of condensation to the raw blood entering the evaporation chamber (5a) of that same evaporator (1). Once condensed, it goes through a lamination valve (12d), which reduces its pressure, and returns in the liquid state to the exchanger (12a) to again be evaporated, and thereby describing a closed loop.

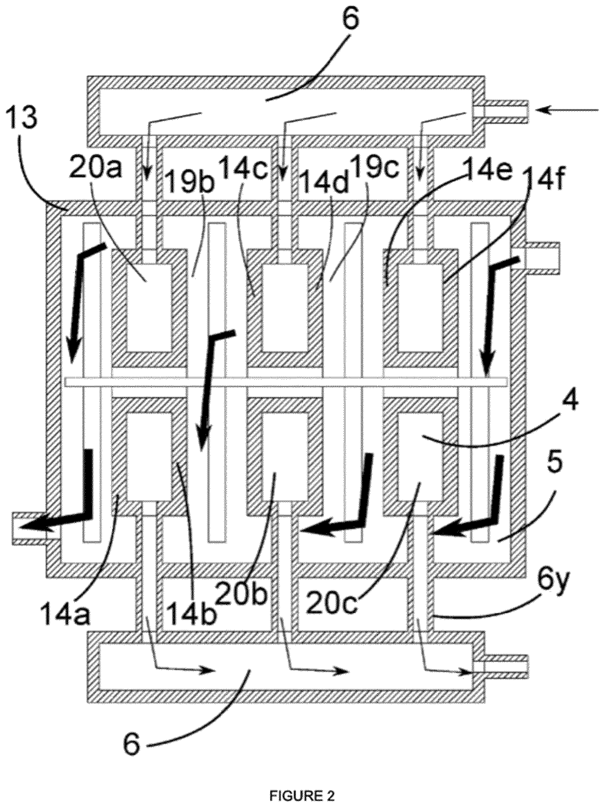

**Figure 2** shows a schematic drawing of an evaporator to illustrate the nomenclature used herein. The measurements and proportions are exaggerated for the purpose of increasing clarity. A shell (13) can be seen, inside of which there are housed a total of six heat exchange plates (14a, 14b, 14c, 14d, 14e and 14f). This particular embodiment shows an evaporation chamber (5) through which blood circulates, and a condensation chamber (4) through which vapor circulates. The paths of the blood and vapor are indicated in a representative manner by means of curved arrows; for the vapor, line thickness is thin and for blood it is thick. The separation between both chambers (4 and 5) is leak-tight, such that at no time does contact between the two fluids occur. In this particular embodiment, the condensation chamber (4) comprises a total of three sub-chambers (20a, 20b and 20c), which are all connected through pipes (6y), to two collectors (6), such that they form a single volume, the aforementioned condensation chamber (4). The evaporation chamber (5) comprises four sub-chambers (19a, 19b, 19c and 19d), which are also all in communication, also forming a single volume, with the aforementioned evaporation chamber (5). An agitator (23) actuated by a shaft (16) is housed inside each of the sub-chambers (19a, 19b 19c and 19d) of the evaporation chamber (5).

It can be seen that a sub-chamber is housed between every two contiguous plates. Thus, for example, the sub-chamber (20a) belonging to the condensation chamber (4) is located between plates (14a) and (14b). The sub-chamber (19b) belonging to the evaporation chamber (5) is located between plates (14b) and (14c). It must be observed that at each of the two ends of the evaporator there is located a sub-chamber (19a and 19d) which, as an exception, is not located between two contiguous plates (14a, 14b, 14c, 14d, 14e and 14f), but rather between plate and shell (13).

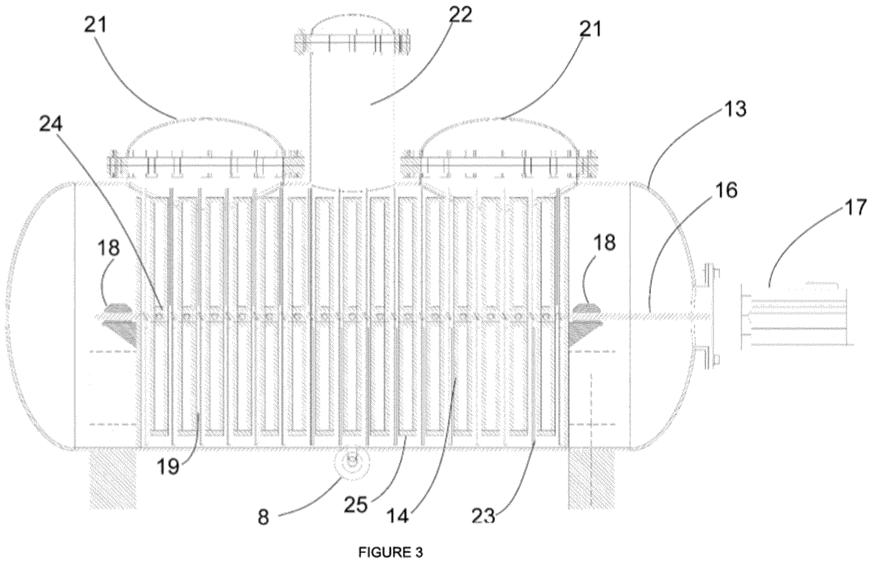

**Figure 3** depicts a particular embodiment of an evaporator, which can be any of the three (1, 2 or 3). The evaporator comprises an outer shell (13), which houses therein the heat exchange plates (14) and agitators (23), which describe a rotational movement by means of being secured to a shaft (16), with said shaft being actuated by a motor (17) outside the shell (13). The shaft is supported inside the evaporator by means of respective supports (18), which hold it while at the same time promote its rotation. To that end, the supports (18) are formed as sliding contact bearings that do not require lubrication.

The shell (13) has in is upper part two manholes (21) for the purpose of allowing access to the interior thereof for cleaning, inspection, repair, etc. They are particularly advantageous for the cleaning and manual removal of fibrin accumulations after each work day. A gravimetric decantation pipe (22) is located in the central part which helps to purify the vapor that is obtained from boiling the blood. More specifically, its diameter is selected such that the rate of ascent of the gases is slow enough so that the liquid particles in suspension do not follow the gas along its upward path through the pipe (22), but rather precipitate due to gravity. In the upper area of said conduit (22), there is a vapor outlet pipe (not depicted in the figure) so the vapor can be taken to the next evaporator (1, 2 or 3), or, where appropriate, the condenser (11).

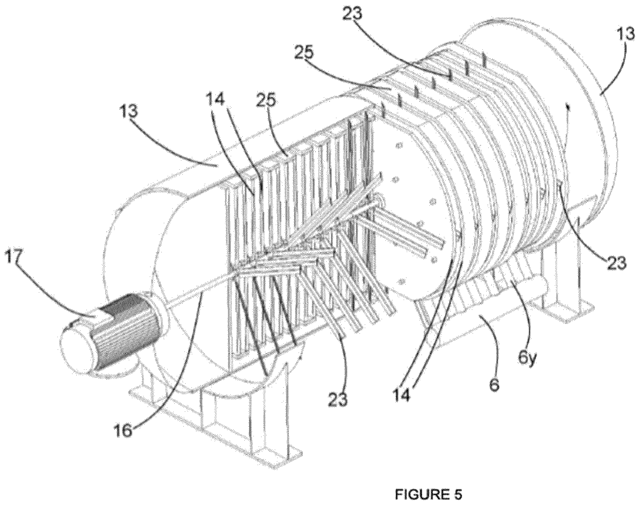

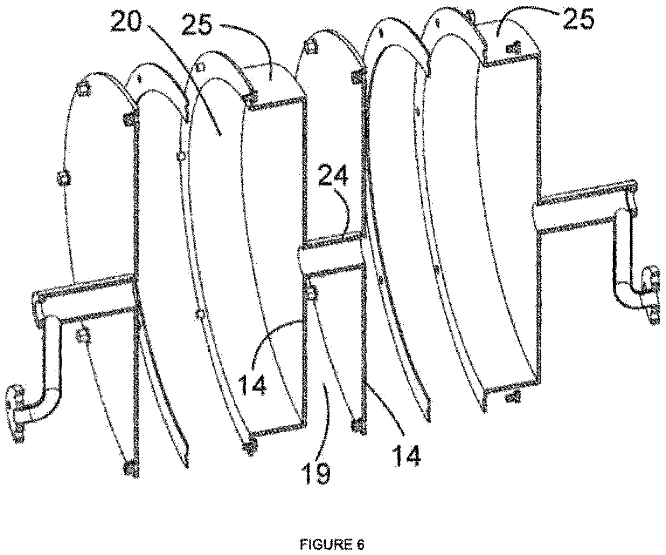

The blood is introduced at a point (not depicted in the figure) of the upper area of the evaporator, falls due to gravity and then occupies the volume of each of the sub-chambers (19) of the evaporation chamber (5). Agitators (23) which are secured to the shaft (16) and carry out a rotational movement run through these sub-chambers (19). The blood is therefore under mechanical agitation at all times. If the depicted evaporator is the first evaporator (1) or the second evaporator (2), the agitators (23) will be of two different types, those belonging to the first and second plurality of agitators, depicted in Figures 5 and 6. Preferably both types of agitators are located in each of the sub-chambers (19).

The sub-chambers (20) of the condensation chamber (4) must allow the rotating shaft (16) to go through them and at the same time allow maintaining the leak-tightness between both chambers (4 and 5). To that end, each pair of contiguous plates (14) demarcating a sub-chamber (20) have a circular perforation in the centre thereof which the shaft (16) can go through, and a cylindrical part (24) is arranged concentric with both perforations, but having a larger diameter and welded to both plates (14). Mobility of the shaft (16) and leak-tightness are thereby assured.

To demarcate the condensation chamber (4) and make it leak-tight, enclosures (25) are arranged welded around the perimeter of each pair of contiguous plates (14) which enclose a sub-chamber (20). The enclosures (25) adapt to the geometry of the plates they join together; for example, if the plates to be joined together are circular, the enclosures will have a circular ring-shaped section. The solutions described in this paragraph and in the preceding paragraph are common in the state of the art and further explanations are not considered necessary.

The blood outlet conduit (8) is located in the lowermost area of the depicted evaporator. Blood is discharged through it to the next evaporator (2 or 3), or out of the system, where appropriate, if the evaporator is the third evaporator (3).

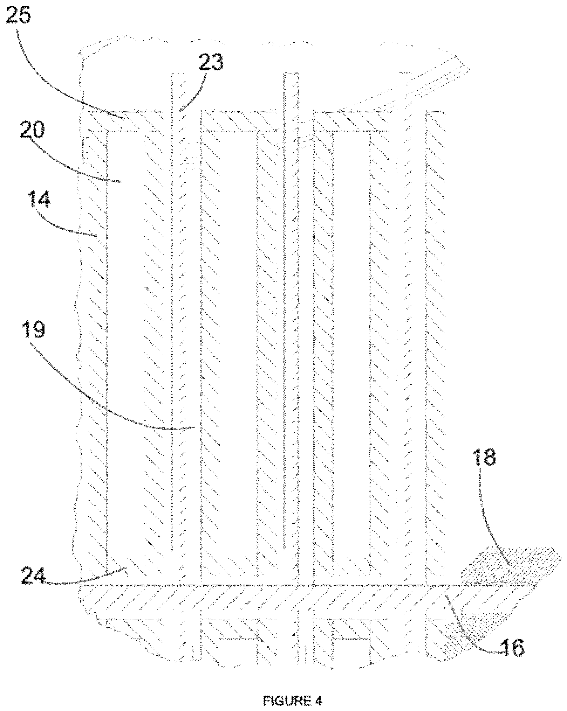

**Figure 4** depicts a detail of Figure 2. A total of six vertical heat exchange plates (14) can be observed. A sub-chamber is arranged between every two contiguous plates. Sub-chambers (19) of the evaporation chamber (5) and sub-chambers (20) of the condensation chamber (4), with their corresponding enclosures (25) assuring leak-tightness between both chambers (4 and 5), which are arranged in an alternating manner, can be seen. Agitators (23), which are not specified in this figure as belonging to any of the three pluralities (23a, 23b or 23c), are located in the first sub-chambers (19). The agitators (23) are secured to the shaft (16), which imparts rotational movement to them.

The rotating shaft (16) passes through one of its supports (18) and goes through the central part of the six plates (14) and the three sub-chambers (20) of the condensation chamber (4), as shown in this figure. To assure leak-tightness, cylindrical parts (24) are welded in the corresponding pairs of plates (14) concentric with the perforations of the plates (14). A total of three of these parts (24) can be seen in the figure. As can be seen, the shaft (16) is immersed in the evaporation chamber (5), and is therefore covered by the product to be dried.

**Figure 5** shows a perspective view of an evaporator according to Figures 2 and 3. The shell (13) is shown with a partial cross section to make the interior thereof as well as part of the exchange plates (14) visible. The motor (17), the shaft (16) actuated by said motor, and agitators (23) secured to said shaft, can be seen, without defining to which plurality (23a, 23b or 23c) they belong. The enclosures (25) are likewise visible. In order to put all the sub-chambers (20) of the condensation chamber (4) in contact and thereby form a single volume, all of them are connected to collector (6) through pipes (6a). In the figure, there is one pipe (6a) for each sub-chamber (20), where the pipes (6a) enter the sub-chambers (20), going through the enclosures (25) thereof. In this case, the collector (6) is an outlet collector as it is located in a lower area, and the condensed fluid (R-134a or vapor, where appropriate), accumulates on it. For the sake of simplicity, the manholes (21) and the decanting pipe (22) have been omitted in this figure.

**Figure 6** shows a cross-sectional perspective view of two exchange plates (14), with the outer enclosures (25) and the cylindrical part (24) between both plates (14) being visible. The shaft which moves the agitators (not depicted in this figure) goes through the interior of the cylindrical part (24). A sub-chamber (19) of the evaporation chamber and a sub-chamber (20) of the condensation chamber are indicated. This figure is useful for showing the aforementioned elements in perspective to help better understand them, but in no case does it constitute a limiting example of the scope of the invention.

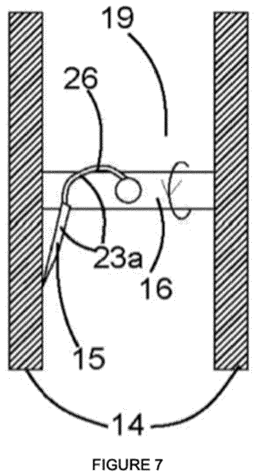

**Figure 7** shows a depiction of the first plurality of agitators (23a) present in the first evaporator (1) and second evaporator (2). Two contiguous exchange plates (14) between which there is housed a sub-chamber (19) belonging to the evaporation chamber (5) are depicted therein. Therefore, it contains blood to be dried. The shaft (16) goes through the sub-chamber (19) and describes a rotational movement, as indicated in the figure. The agitator (23a) comprises a scraper blade (15) which applies pressure against one of the plates (14) by means of the action of a metal sheet (26). Said sheet (26), in standby, has a straight configuration, but as can be seen in the figure, it is installed being forced to bend. The sheet (26), in accordance with its susceptibility to recovering its initial straight configuration, thereby applies mechanical stress which makes the blade (15) press against the wall of the plate (14). The angle of incidence with which the blade (15) shears the blood is acute and less than 30°. This configuration favours the capacity thereof to descale the plate (14) to remove deposits, and contact with the plate (14) generates a mechanical destabilisation of the boundary layer of the fluid, such that the heat transfer coefficient increases considerably.

Two phenomena are sought for the limitation of coagulation: significant turbulence in the fluid, and the capacity to attract and accumulate fibrin on certain surfaces, such that it separates from the rest of the fluid, thus limiting its capacity to form coagula. In this sense, the blades do not generate turbulence in the fluid that is of the suitable magnitude, although they do generate one in the boundary layer. Furthermore, their angle of incidence complicates the adhesion and subsequent consolidation of fibrin on the surface thereof. For these reasons, it is essential to separate the functions of descaling and breaking of the boundary layer, from the limitation of coagulation, which is particularly reserved for the second plurality of agitators (23b).

It should be pointed out that the first plurality of agitators (23a) is the one having the configuration which contributes the most to the increase in the heat transfer coefficient as it mechanically breaks the boundary layer of the blood.

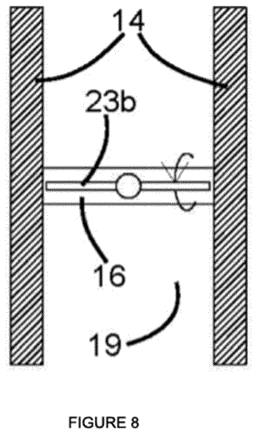

**Figure 8** shows a depiction of the second plurality of agitators (23b) present in the first evaporator (1) and second evaporator (2), like the first plurality of agitators (23a). Two contiguous heat plates (14) between which there is housed a sub-chamber (19) of the evaporation chamber (5) can be observed therein. That is, it contains blood therein. The rotating shaft (16) and the agitator (23b) are depicted. Said agitator has a configuration similar to that of a paddle or oar, with a slender rectangular cross section, and it moves closer to the walls of the plates (14) until it is at a preferred distance of 3 mm from each of them. The angle of incidence at which it goes through the fluid is or close to 90°. This arrangement generates a very intense turbulence in the fluid, which helps prevent coagulation, and the angle of incidence potentiates the formation and retention on its surface of those fibrin networks which could not be prevented by means of agitation.

It can be observed that through the aforementioned separation between the plates (14) and the agitator (23b) of 3 mm, a certain volume of blood is forced to circulate. Passing through this narrow space generates shear forces that destabilise the formation of fibrin networks.

Another relevant phenomenon is that the closer both plates (14) are, the greater the effect of shear stress on fibrin. This is due to the fact that since the plates (14) are moved closer to one another, the same surface swept by the agitators (23b) is maintained, but the volume of blood between both plates (14) is smaller, such that the (surface to cross) / (volume of blood) ratio becomes larger. As a result, the closer the plates are, the less time it takes the entire volume of blood between plates (14) to go through the aforementioned separation between agitator (23b) and plate (4), which is 3 mm in this embodiment.

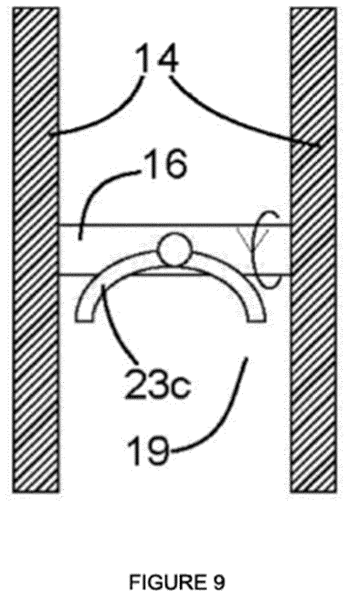

**Figure 9** depicts the third plurality of agitators (23c). In this embodiment of the invention, these are the only agitators that are present in the third and last evaporator (3). The three types of agitators (23a, 23b and 23c) could be arranged in any of the evaporators (1, 2 or 3), although there is no preferred configuration. Two contiguous plates (14) between which there is housed a sub-chamber (19) belonging to the evaporation chamber (5), covered in blood, can be seen. The rotating shaft (16) and the agitators (23c) can also be observed. Said agitators have paddles with a concave shape, which potentiates the product entrainment capacity. The thickness thereof is designed to provide suitable mechanical strength for moving the weight of the blood when it is no longer a fluid. This differentiation in design is fundamental, because if an agitator designed to stir liquid blood is used to stir blood that no longer flows, it would be subjected to very significant mechanical stresses which would largely limit its service life.

## Claims

1. A system for the production of a dried product from liquid blood or derivatives, **characterized in that** it comprises:
a plurality of multi-effect evaporators (1,2,3) connected in series, wherein each multi-effect evaporator (1,2,3) comprises:
plate heat exchangers (14) arranged vertically relative to a longitudinal axis of the multi-effect evaporator (1,2,3),
evaporation sub-chambers (19) and condensate sub-chambers (20) defined between every two contiguous plate heat exchangers (14), the evaporation sub-chambers (19) and condensate sub-chambers (20) being arranged in an alternating manner; and
a plurality of agitators (23) located in the evaporation sub-chambers (19), wherein the agitators (23) are attached to a rotating shaft (16) of the multi-effect evaporator (1,2,3);
a heat pump (12) comprising a heat exchanger (12a), the heat exchanger (12a) being configured to transfer heat from a hot residual effluent to a fluid that goes through a compressor (12a) up to the plurality of multi-effect evaporators (1,2,3); and
a final condenser (11) configured to collect vapor generated by the plurality of multi-effect evaporators (1,2,3).

2. The system according to claim 1, wherein the agitators (23) are selected from a group comprising:
a first plurality of agitators (23a) which are blades or brushes that contact a contiguous plate heat exchanger (14),
a second plurality of agitators (23b) having a rectangular cross section that does not contact the contiguous plate heat exchangers (14).

3. The system according to claim 2, wherein the agitators (23a) of the first plurality of agitators (23a) form an angle with the contiguous plate heat exchanger (14) that is lower than 30°.

4. The system according to claim 2, wherein the agitators (23b) of the second plurality of agitators (23b) form an angle with the contiguous plate exchangers (14) of 90°C.

5. The system according to claim 4, **characterized in that** the second plurality of agitators (23b) keep a clearance with the contiguous plate exchangers (14) of 3 mm.

6. The system according to claim 2, comprising a third plurality of agitators (23c), where the agitators (23c) of the third plurality of agitators (23c) comprise a concave cross section.

7. The system according to claim 6, comprising three multi-effect evaporators (1,2,3), wherein a first multi-effect evaporator (1) and a second multi-effect evaporator (2) of the three multi-effect evaporators (1,2,3) only comprise agitators of the first plurality of agitators (23a) and of the second plurality of agitators (23b), and a third multi-effect evaporator (3) of the three multi-effect evaporators (1,2,3) only comprises agitators of the third plurality of agitators (23c).

8. The system according to claim 7, wherein the sub-chambers (19) of the first multi-effect evaporator (1) and the second multi-effect evaporator (2) comprise agitators of both the first and second plurality of agitators (23a,23b), and the sub-chambers (19) of the third multi-effect evaporator (3) only comprise agitators of the third plurality of agitators (23c).

9. The system according to any one of the preceding claims, wherein the heat pump (12) comprises a first heat exchanger connected in series to a second heat exchanger.

10. The system according to any one of the preceding claims, wherein the multi-effect evaporators (1,2,3) are located on one and the same vertical.

11. The system according to claim 6, wherein the agitators of the third plurality of agitators (23c) comprise one or more paddles configured to move the blood or derivatives within the sub-chamber (19) the agitator is located.

## Patentansprüche

1. System zur Herstellung eines getrockneten Produkts aus flüssigem Blut oder Derivaten, **dadurch gekennzeichnet, dass** es Folgendes umfasst:
eine Mehrzahl von in Reihe verbundenen mehrstufigen Verdampfern (1, 2, 3), wobei jeder mehrstufige Verdampfer (1, 2, 3) Folgendes umfasst:
Plattenwärmetauscher (14), die vertikal in Bezug auf eine Längsachse des mehrstufigen Verdampfers (1, 2, 3) angeordnet sind,
Verdampfungsunterkammern (19) und Kondensatunterkammern (20), die zwischen jedem zweiten benachbarten Plattenwärmetauscher (14) definiert sind, wobei die Verdampfungsunterkammern (19) und die Kondensatunterkammern (20) abwechselnd angeordnet sind; und
eine Mehrzahl von Rührwerken (23), die sich in den Verdampfungsunterkammern (19) befinden, wobei die Rührwerke (23) an einer rotierenden Welle (16) des mehrstufigen Verdampfers (1, 2, 3) angebracht sind;
eine Wärmepumpe (12), die einen Wärmetauscher (12a) umfasst, wobei der Wärmetauscher (12a) dazu ausgestaltet ist, Wärme von einem heißen Restabfluss zu einem Fluid zu übertragen, das durch einen Kompressor (12a) bis zu der Mehrzahl von mehrstufigen Verdampfern (1, 2, 3) verläuft; und
einen Endkondensator (11), der dazu ausgestaltet ist, von der Mehrzahl von mehrstufigen Verdampfern (1, 2, 3) erzeugten Dampf zu sammeln.

2. System nach Anspruch 1, wobei die Rührwerke (23) ausgewählt sind aus der Gruppe umfassend:
eine erste Mehrzahl von Rührwerken (23a), bei denen es sich um Klingen oder Bürsten handelt, die sich in Kontakt mit einem benachbarten Plattenwärmetauscher (14) befinden,
eine zweite Mehrzahl von Rührwerken (23b), die einen rechteckigen Querschnitt aufweisen, der sich nicht in Kontakt mit den benachbarten Plattenwärmetauschern (14) befindet.

3. System nach Anspruch 2, wobei die Rührwerke (23a) der ersten Mehrzahl von Rührwerken (23a) einen Winkel mit dem benachbarten Plattenwärmetauscher (14), der kleiner als 30° ist, bilden.

4. System nach Anspruch 2, wobei die Rührwerke (23b) der zweiten Mehrzahl von Rührwerken (23b) mit den benachbarten Plattentauschern (14) einen Winkel von 90°C bilden.

5. System nach Anspruch 4, **dadurch gekennzeichnet, dass** die zweite Mehrzahl von Rührwerken (23b) zu den benachbarten Plattentauschern (14) eine Lücke von 3 mm halten.

6. System nach Anspruch 2, umfassend eine dritte Mehrzahl von Rührwerken (23c), wobei die Rührwerke (23c) der dritten Mehrzahl von Rührwerken (23c) einen konkaven Querschnitt umfasst.

7. System nach Anspruch 6, umfassend drei mehrstufige Verdampfer (1, 2, 3), wobei ein erster mehrstufiger Verdampfer (1) und ein zweiter mehrstufiger Verdampfer (2) der drei mehrstufigen Verdampfer (1, 2, 3) nur Rührwerke der ersten Mehrzahl von Rührwerken (23a) und der zweiten Mehrzahl von Rührwerken (23b) umfassen, und ein dritter mehrstufiger Verdampfer (3) der drei mehrstufigen Verdampfer (1, 2, 3) nur Rührwerke der dritten Mehrzahl von Rührwerken (23c) umfasst.

8. System nach Anspruch 7, wobei die Unterkammern (19) des ersten mehrstufigen Verdampfers (1) und des zweiten mehrstufigen Verdampfers (2) Rührwerke von sowohl der ersten als auch der zweiten Mehrzahl von Rührwerken (23a, 23b) umfassen, und die Unterkammern (19) des dritten mehrstufigen Verdampfers (3) nur Rührwerke der dritten Mehrzahl von Rührwerken (23c) umfassen.

9. System nach einem der vorstehenden Ansprüche, wobei die Wärmepumpe (12) einen ersten Wärmetauscher umfasst, der in Reihe mit einem zweiten Wärmetauscher verbunden ist.

10. System nach einem der vorstehenden Ansprüche, wobei sich die mehrstufigen Verdampfer (1, 2, 3) auf ein und derselben Vertikalen befinden.

11. System nach Anspruch 6, wobei die Rührwerke der dritten Mehrzahl von Rührwerken (23c) ein oder mehrere Paddel umfasst, die dazu ausgestaltet sind, das Blut oder die Derivate innerhalb der Unterkammer (19), in der sich das Rührwerk befindet, zu bewegen.

## Revendications

1. Système pour la production d'un produit séché à partir de sang liquide ou de dérivés, **caractérisé en ce qu'il comprend** :
une pluralité d'évaporateurs à effets multiples (1, 2, 3) connectés en série, chaque évaporateur à effets multiples (1, 2, 3) comprenant :
des échangeurs de chaleur à plaque (14) disposés verticalement par rapport à un axe longitudinal de l'évaporateur à effets multiples (1, 2, 3),
des sous-chambres d'évaporation (19) et des sous-chambres de condensation (20) définies entre tous les deux échangeurs de chaleur à plaque (14) contigus, les sous-chambres d'évaporation (19) et les sous-chambres de condensation (20) étant disposées de manière alternée ; et
une pluralité d'agitateurs (23) situés dans les sous-chambres d'évaporation (19), les agitateurs (23) étant fixés à un arbre rotatif (16) de l'évaporateur à effets multiples (1, 2, 3) ;
une pompe à chaleur (12) comprenant un échangeur de chaleur (12a), l'échangeur de chaleur (12a) étant configuré pour transférer la chaleur d'un effluent résiduel chaud à un fluide qui traverse un compresseur (12a) jusqu'à la pluralité d'évaporateurs à effets multiples (1, 2, 3) ; et
un condenseur final (11) configuré pour recueillir la vapeur générée par la pluralité d'évaporateurs à effets multiples (1, 2, 3).

2. Système selon la revendication 1, dans lequel les agitateurs (23) sont sélectionnés dans un groupe comprenant :
une première pluralité d'agitateurs (23a) qui sont des lames ou des brosses qui sont en contact avec un échangeur de chaleur à plateau (14) contigu,
une seconde pluralité d'agitateurs (23b) ayant une section transversale rectangulaire qui n'est pas en contact avec les échangeurs de chaleur à plaque (14) contigus.

3. Système selon la revendication 2, dans lequel les agitateurs (23a) de la première pluralité d'agitateurs (23a) forment un angle avec l'échangeur de chaleur à plaque (14) contigu qui est inférieur à 30°.

4. Système selon la revendication 2, dans lequel les agitateurs (23b) de la deuxième pluralité d'agitateurs (23b) forment un angle de 90° avec les échangeurs à plaque (14) contigus.

5. Système selon la revendication 4, **caractérisé en ce que** la deuxième pluralité d'agitateurs (23b) conserve un jeu de 3 mm avec les échangeurs à plaque (14) contigus.

6. Système selon la revendication 2, comprenant une troisième pluralité d'agitateurs (23c), où les agitateurs (23c) de la troisième pluralité d'agitateurs (23c) comprennent une section transversale concave.

7. Système selon la revendication 6, comprenant trois évaporateurs à effets multiples (1, 2, 3), dans lequel un premier évaporateur à effets multiples (1) et un deuxième évaporateur à effets multiples (2) des trois évaporateurs à effets multiples (1, 2, 3) comprennent uniquement des agitateurs de la première pluralité d'agitateurs (23a) et de la deuxième pluralité d'agitateurs (23b), et un troisième évaporateur à effets multiples (3) des trois évaporateurs à effets multiples (1, 2, 3) comprend uniquement des agitateurs de la troisième pluralité d'agitateurs (23c).

8. Système selon la revendication 7, dans lequel les sous-chambres (19) du premier évaporateur à effets multiples (1) et du deuxième évaporateur à effets multiples (2) comprennent des agitateurs à la fois de la première et de la deuxième pluralité d'agitateurs (23a, 23b), et les sous-chambres (19) du troisième évaporateur à effets multiples (3) comprennent uniquement des agitateurs de la troisième pluralité d'agitateurs (23c).

9. Système selon l'une quelconque des revendications précédentes, dans lequel la pompe à chaleur (12) comprend un premier échangeur de chaleur connecté en série à un deuxième échangeur de chaleur.

10. Système selon l'une quelconque des revendications précédentes, dans lequel les évaporateurs à effets multiples (1,2,3) sont situés sur une seule et même verticale.

11. Système selon la revendication 6, dans lequel les agitateurs de la troisième pluralité d'agitateurs (23c) comprennent une ou plusieurs pales configurées pour déplacer le sang ou les dérivés à l'intérieur de la sous-chambre (19) où se trouve l'agitateur.
